# EUROPEAN PATENT SPECIFICATION

(11) **EP 3 558 894 B1**
(45) Date of publication and mention of the grant of the patent: **24.11.2021**
(21) Application number: 17832989.2
(22) Date of filing: 19.12.2017
(51) Int. Cl.: C04B 35/52, A47J 37/00, A47J 27/00, C04B 35/532, C04B 35/626, C04B 35/632, C04B 35/64

(54) **PROCESS OF OBTAINING A CONTAINER MADE OF CARBON MATERIAL FOR COOKING FOOD PRODUCTS**
VERFAHREN ZUR HERSTELLUNG EINES BEHÄLTERS AUS KOHLENSTOFF MATERIAL ZUM KOCHEN VON NAHRUNGSMITTELN
PROCÉDÉ D'OBTENTION D'UN RÉCIPIENT EN MATIÈRE EN CARBON POUR LA CUISSON DE PRODUITS ALIMENTAIRES

(30) Priority: 20.12.2016 IT 201600129050
(43) Date of publication of application: 30.10.2019
(73) Proprietor: Biocookup S.r.l., 61033 Fermignano (Pesaro-Urbino) (IT)
(72) Inventor: SAMPAOLESI, Marco, 61033 Fermignano (Pesaro-Urbino) (IT)
(74) Representative: Feltrinelli, Secondo Andrea
(86) International application number: PCT/IB2017/058147
(87) International publication number: WO 2018/116170

(56) References cited:
- CN-A- 101 798 221
- CN-A- 106 145 949
- CN-B- 102 923 008
- GB-A- 461 960
- IT-A1- FI20 110 022
- JP-B1- 4 889 814
- KR-A- 20080 018 643
- KR-A- 20130 126 390
- US-A- 3 084 394
- US-A- 3 932 568
- US-A- 4 874 564
- US-A1- 2006 027 792

## Description

### TECHNICAL FIELD OF THE INVENTION

The present invention regards a process for making a kitchen object.

More particularly, the invention regards a container for cooking foods, such as a frying pan, a saucepan, a pan, a wok, a grill or a lid.

### STATE OF THE PRIOR ART

In the field of containers for cooking or receiving foods, such as pots, pans, frying pans, woks, grills and the like, containers are known that are provided with an anti-adherent/non-stick coating, or are not covered with such coating.

Generally, the materials most used for making kitchen utensils are metals, optimal heat conductors and provided with good mechanical strength, but ceramic and glass are also used.

Metals are subjected to corrosion, mainly irreversible, while the non-metals have problems related to thermal shocks, fragility and they are not adapted to the most modern cooking techniques, such as induction heating, a characteristic only of electrical energy conductor materials.

With regard instead to containers made of carbon, the latter can be artificially produced by starting from organic and mineral substances with high carbon content, such as carbon coke, or by biomass carbonization, which are suitably mixed and molded in large blocks, with different technologies in accordance with the properties that one wishes to obtain on the final object.

Once the so-called "green" items have been obtained from molding or by means of other techniques such as extrusion, these are placed in large furnaces and brought to high temperature, about 900-1000°C in total absence of oxygen, in order to convert the entire structure into carbon. Such process requires a very slow heating in order to allow the binder present to carbonize or pyrolyze, releasing liquids and gases, in a manner such that the exit of such products does not induce cracks or other breakage defects in the treated products.

Sometimes, as a function of the thickness of the treated components, two or three weeks of thermal treatment might be necessary. The absence of oxygen is essential in order to prevent the carbon from oxidizing and irreversibly bonding to the oxygen, forming carbon dioxide.

In order to obtain such atmosphere, the products are placed in metal containers and covered with sand, coke and other granulates, in order to protect the product from oxidation. At this point, the products have a completely carbon but not crystalline structure, and the product has a porosity that needs to be reduced, in order to increase the strength, by means of a process of impregnation with liquid organic binders and subsequently another carbonization process is executed at 900-1000°C, like the preceding.

The final step for obtaining a graphite structure, i.e. that of lower energy for such material, is to bring the products to a temperature close to 2000-2500°C.

In total absence of oxygen and with very long thermal cycles, as a function of the thickness of the products to be treated, some obtainment processes can reach 30-40 days of complete treatment.

Such treatment is attained in special furnaces, which exploit the passage of electric current through the semi-finished product, which - after having undergone a carbonization process of the binder - is able to conduct electric current, so that the heating is obtained by Joule effect, up to temperatures of about 2000-2500°C.

Once the crystalline structure of the graphite is obtained, by means of chip removal processes and other non-conventional processes, it is possible to obtain shapes and components of different size and geometries.

CN106145949A, JP4889814B1 and KR20080018643A teach respective solutions according to the state of the prior art.

### OBJECTS OF THE INVENTION

One object of the present invention is to provide a new process for making products, such as containers or utensils for kitchen use.

Another object of the present invention is to provide a process which is less expensive than the conventional processes.

Another object of the present invention is to provide a process that is quicker than the processes proposed up to now.

In accordance with the invention, a process is provided according to claim 1.

The dependent claims refer to preferred and advantageous embodiments of the invention.

### EMBODIMENTS OF THE INVENTION

The present invention regards a process for producing an object or product, a kitchen utensil or container, such as a frying pan, a bowl, a saucepan, a pan, a wok, a grill, a lid, a pot, a container or similar utensils, substantially made entirely of carbon, possibly with the addition of a coating that can possess anti-adherent/non-stick properties.

More particularly, a process in accordance with the present invention comprises the following steps:
- mixing powders of graphite with an organic binder characterized by a high carbon content, namely phenol resin, the powders being present in a percentage that can vary between about 80*%* and about 86*%* by weight over the total weight of the mixture, while the organic binder is present in a percentage that can vary between about 10% and about 17*%* by weight over the total weight of the mixture; the quantity of binder is a function of the carbon content thereof, so as to prevent having an overly high loss by weight after the carbonization treatment, and vice versa so as to have sufficient binder for the hot molding of the object, up to the obtainment of a uniform mixture;
- loading the mixture obtained in the preceding step in a heated mold and hot molding the mixture, in order to confer the geometry of the product and to harden the binder, thus obtaining the object, the molding being for example carried out at the melting or softening temperature of the binder, equal to about 130-200°C or 150-180°C, e.g. to about 160°C, and at a molding pressure that can be greater than 30 or 40 MPa;
- extracting the object from the mold and placing it in a container, such as a protective container;
- thermally treating the object within the protective container in the absence of oxygen or with oxygen in a quantity less than that of the atmosphere as long as the organic binder is transformed into carbon, in particular after having released water vapor and carbon dioxide.

On such matter, it is recommended to not have a percentage by weight of oxygen higher than 15%; in particular it is advised to obstruct or prevent incoming air flows, which would determine an entrance of oxygen.

In the present patent application, by high carbon content it is intended the quantity of carbon atoms present in the material, in percentage. For such purpose, polymers are characterized by a percentage of carbon content, defined "carbon yield" in the literature, which is expressed in percentage. Such value refers to precursors for producing carbon, such as PAN for producing carbon "fibres". In a process according to the present invention, a material with high "carbon yield" is used, so as to obtain low losses by weight and good final product density.

With reference to such aspect, a molded product obtained with a process according to the present invention can be composed of 80-85% graphite, 10-15% phenol resin and a variable composition of additives not greater than 3-4%; in such case, the total carbon content present would be greater than 90% of the total weight of the product, since phenol resin consists of more than 55-60% carbon.

During the mixing step, graphite is mixed at about 80-86*%*, e.g. 84-86% by weight, according to one version of the present invention equal to about 85% by weight, a phenol resin at about 10-17% by weight, e.g. 10-12% by weight, and according to one version of the present invention equal to about 12% by weight and additives at about 1-5% by weight, e.g. equal to about 3% by weight.

The graphite used can have a structure which is not completely crystalline.

With a process according to the present invention, one therefore starts from substantially 100% graphite and, after thermal treatment, graphite is obtained with a structure (deriving from carbonized phenol), which decreases the level of crystallization of the graphite, involving lower density and high porosity with respect to a graphite obtained industrially with classic processes.

The mixture can also be pre-heated, for example to a temperature comprised between 80 and 120°C, avoiding the melting of the mixture, before loading in the mold, in order to optimize the cooking time - but this could also involve molding defects, if the geometries of the objects to be obtained are complex. In the present case, it is desired to exploit the greater plasticity of the powder that is reached at the time of compression, when the mixture starts to be heated, since - once fluidified - the crosslinking also starts.

In addition, the powders can have a grain size comprised between 106 and 53 microns (150 and 300 MESH).

The grain size of the powder is important in order to have a good final density of the product, since an overly fine powder would require more energy during molding, caused by the friction due to the high contact surface of the grains, while an overly large powder would not allow obtaining a sufficient homogenization of the material.

The value of the maximum density of the graphite can vary between about 1.8 and 2.3 g/cm³, e.g. 1.9-2.0 g/cm³ or 2.1-2.2 g/cm³.

The hot molding can be conducted for about 30-40 seconds for each mm of thickness of the objects to be worked. In the case of a thickness equal to 10 mm, for example, 300 to 400 seconds can be necessary for the complete crosslinking of the product or object, preventing breakage during extraction, which does not provide for any cooling of the mold or of the piece, in the case of thermosetting binder.

In addition, the hot molding could be conducted in three successive steps in order to allow the gas to exit from the mixture being worked.

More particularly, during a first step, 20-40% of the maximum compression force is applied, if desired 30% of the maximum compression force, for example equal to about 70-80 MPa; during a second step, no compression force is applied and only the punch of the mold is abutted against the mixture; and finally during a third step, 100% of the compression force (about 70-80 MPa) is applied, so as to complete the molding.

Due to such expedient, the exit of the gases or vapors from the mixture is facilitated, in particular during the second step.

The thermal treatment is conducted for a total time of about 15-28 hours, if desired 15-20 hours or 20-28 hours, e.g. 19 or 24 hours of heating plus a natural or forced heating, up to a temperature of about 700-900°C or 800-900°C, e.g. about 820-840°C, if desired 830°C or 850-900°C, in order to convert the organic binder into carbon.

The thermal treatment can also be attained with a heating element, such as an oven, also if desired a tunnel oven.

The process comprises a step of introducing additives into the mixture or a step of adding additives to the powders and to the organic binder to be mixed, the additives being introduced or added in a percentage that can vary between about 1 and 5% by weight over the total weight of the mixture. The additives improve the flow of the material inside the mold, and they prevent the adherence of the mixture on the walls thereof and additionally they allow adjusting the porosity during the thermal treatment.

More particularly, during the thermal treatment, the presence and the quantity of the additives allows adjusting the speed of the treatment, as a function of the porosity and of the quality of the material that one wishes to obtain.

The additives can for example comprise lubricant oils and/or waxes, stearic acid derivatives. The additives can for example include lubricants, surfactants, plastifiers etcetera.

The step of thermal treatment of the object comprises or causes the carbonization or pyrolysis of the organic binder, so as to obtain a completely carbon structure, i.e. only comprising carbon.

Various technologies are available for attaining the thermal treatment step, such as vacuum treatments or treatments in inert atmospheres and/or in reducing atmospheres.

According to a non-limiting example, the thermal treatment step comprises a step of closing the object in a saggar or closed box, e.g. having metal delimitation walls, adding graphite powders - about 1 kg of graphite powders for every 100 kg of loaded product - such that the quantity of oxygen within the saggar or box is reduced, partly by the graphite powder and partly because the same will be bonded to the hydrogen produced during the treatment, forming water vapor.

According to one version of the present invention, the thermal treatment step comprises the following steps conducted in sequence.

During the first sub-step of thermal treatment, the temperature is increased to about 300-350°C, with a low gradient in order to complete the crosslinking of the binder and allow molding additives to evaporate from the product.

In this manner, the additives - by evaporating - leave pores free, the presence of which is decisive for the subsequent step. The temperature increase ramp, i.e. the increase of the temperature as a function of time, must be very slow, in order to prevent the onset of cracks and breakage in the product, which could be caused by a violent evaporation of the gases. In such step, there is a minimum loss by weight due to the loss of humidity and additives.

Subsequently, a second sub-step provides for pyrolyzing or carbonizing the binder, up to a temperature of about 600-650°C. In such step, the binder is broken into various compounds, mainly water, carbon dioxide and nitrogen compounds in minimal part. As the reaction progresses, the heating ramp can be increased, since the increase of porosity, mainly due to the evaporation of the additives, facilitates the exit of the pyrolysis products. Also in such step, the heating must be controlled, since cracks and breakage are very common if the reaction times are not respected.

The gradient can for example be increased by 30% up to a maximum of more than double, in the final step, with respect to the start.

By metering the quantity of the additives, it is possible to adjust the porosity and consequently the heating speed. In particular, by increasing the quantity of additives, it is possible to increase the speed of carbonization, but consequently a material would be obtained with excessive porosity. In the absence of additives and therefore with a certain "starting" porosity, the treatment would result too long to prevent the onset of cracks and breakage or sometimes nearly impossible. In such step, there is the greatest loss by weight of the thermal treatment, due to the pyrolysis of the resin.

In accordance with a third sub-step, the object is heated to a temperature close to 800-900°C, where there is no longer a loss by weight since the binder is completely carbonized. Such step is important for obtaining a "partial" graphitization of the product, or better yet a kind of realignment of the crystallinity, increasing electrical and thermal conductivity of the material, though with a slight decrease of the mechanical strength.

Overall, the thermal treatment provides for a duration of about 20-28 hours, according to one version of the present invention a duration of about 24 hours for the heating which can be followed by a natural or forced cooling. During cooling, the products should not come into contact with oxygen until cooled to 400°C, since at such temperature there can be a considerable oxidation of the material.

The process can also comprise a step of surface treatment for the application of a coating, such as sandblasting or grinding or brushing, for example a ceramic/metallic coating or surface treatment. The coating can be anti-adherent/non-stick or not and be applied with technologies such as spraying, plasma spray, CVD, PVD or flame spray.

The coating step can also serve for conferring uniformity to the surface and for removing possible ash.

According to a non-limiting example, the coating step provides for a sandblasting step for cleaning the surface of the material and making it uniform for the painting treatment, which can be conducted by applying an anti-adherent coating with one or more layers, e.g. with base of PTFE, PEEK, PES, FEP, PFA, Sol-Gel, silicone lacquer, glazed enamel or stone effect etc.

The sandblasting confers uniformity to the surface of the product and it is useful for removing possible ash.

During the application of the finish component, also decorations can be applied to the product, such as pad printing, silk-screen printing, etcetera.

In addition, before the application of the coating, a ceramic coat can be applied by means of various technologies such as plasma spray, PVD, CVD, thermal spray etc. on the carbon surface, in order to improve hardness and scratch resistance to the detriment however of a reduction of the thermal conductivity.

In substance, a process in accordance with the present invention uses carbon graphite with an incompletely crystalline structure, to which it is desired to provide an initial geometry before the thermal treatment of carbonization of the binder, so as to avoid the graphitization treatment.

The process in this manner is less expensive, eliminating the graphitization and working via chip removal.

In addition, the process provides for lower carbonization times, in particular if additives are used in the initial mixture, which allow an increase of the cooking speed.

In addition, the final properties of the obtained object are inferior with regard to several parameters than a pure graphite, but the object has a greater mechanical strength than crystalline graphite, is harder and less soft/flexible, with good properties heat conduction, electrical conduction and optimal resistance to corrosion, oxidation and thermal shocks. The object obtainable with a process in accordance with the present invention consists of about 99% of completely organic material and can be easily recovered at the end of the useful lifecycle.

Considering then the conducting properties of the object, this can be used on every cooking surface, also for induction cooking, without having to add other materials and, in addition, the object is adapted for operating in a conventional oven and microwave oven.

The process of compression molding of powders allows obtaining innovative shapes and geometries with respect to the conventional methods for forming pots and pans and additionally - given its organic nature - is an eco-sustainable and biocompatible product.

Modifications and variations of the invention are possible within the protective scope defined by the claims.

## Claims

1. Process for producing a kitchen object, such as a frying pan, a bowl, a saucepan, a pan, a wok, a grill, a lid, a pot, a container, comprising the following steps:
mixing powders of graphite with an organic binder with high carbon content and additives, until a uniform mixture is attained, said powders being present in a percentage that can vary between about 80% and about 86% by weight over the total weight of the mixture, while said organic binder comprises a resin phenol being present in a percentage that can vary between about 10% and about 17% by weight over the total weight of the mixture, said additives being present in a percentage that can vary between about 1% and about 5% by weight over the total weight of the mixture;
loading the mixture in a heated mold and hot molding said mixture so as to obtain an object;
extracting said object from said mold and placing it in a protective container; and
thermally treating said object within said protective container in the absence of oxygen or with oxygen in a quantity less than that of the atmosphere, as long as said organic binder is transformed into carbon,
wherein said thermal treatment occurs for a total time of about 15-28 hours of heating up to a temperature of about 700-900°C, in order to convert the organic binder into carbon.

2. Process according to claim 1, wherein said molding is carried out at the melting temperature of the binder, between about 130°C and 200°C, e.g. between 150 and 180°C.

3. Process according to claim 1 or 2, wherein said thermal treatment occurs for a total time of about 15-20 hours or 20-28 hours of heating up to a temperature of about 800-900°C, in order to convert the organic binder into carbon.

4. Process according to claim 3, wherein said thermal treatment occurs for a total time of about 15-20 hours or 20-28 hours of heating up to a temperature of 820-840°C or 850-900°C, in order to convert the organic binder into carbon.

5. Process according to any one of the preceding claims, wherein during said mixing step, the following are mixed: graphite at about 84-86% by weight, and a phenol resin at about 10-12% by weight.

6. Process according to any one of the claims 1 to 4, wherein during said mixing step, the following are mixed: graphite equal to about 85% by weight, a phenol resin equal to about 12% by weight and additives equal to about 3% by weight.

7. Process according to any one of the preceding claims, wherein said additives comprise one or more elements from the group that includes: lubricants, lubricant oils, waxes, stearic acid derivatives, surfactants, plasticizers.

8. Process according to any one of the preceding claims, wherein said powders have a grain size comprised between 106 and 53 µm (150 and 300 MESH).

9. Process according to any one of the preceding claims, wherein said hot molding is carried out at a pressure greater than 30 or 40 MPa.

10. Process according to any one of the preceding claims, wherein said hot molding is conducted for about 30-40 seconds for each mm of thickness of the object to be worked.

11. Process according to any one of the preceding claims, wherein said step of thermal treatment of said object comprises the carbonization or pyrolysis of the organic binder, in a manner such to obtain a completely carbon structure.

12. Process according to claim 11, wherein said thermal treatment step comprises a step of closing said object in a saggar or box, for example having metal delimitation walls, adding graphite powders, such that the quantity of oxygen inside said saggar or box is reduced partly by the graphite powder and partly because it will be bound to the hydrogen produced during the treatment, forming water vapor.

13. Process according to claim 12, wherein said thermal treatment step comprises in sequence:
increasing the temperature up to about 300-350°C, with a low gradient in order to complete the cross-linking of the binder and allow the molding additives to evaporate from the object, increasing the porosity thereof;
pyrolyzing or carbonizing the binder, up to a temperature of about 600-650°C, such that the binder is broken up into various compounds; and
heating the object to a temperature close to 800-900°C, and during such step there is no longer a loss by weight since the binder is completely carbonized.

14. Process according to claim 13, wherein during said pyrolysis or carbonization step, as the reaction progressively takes place, the heating ramp is increased since the increase of porosity obtained in the preceding step facilitates the exit of the pyrolysis products.

15. Process according to any one of the preceding claims, wherein after said heat treatment, a step is executed for the surface treatment, e.g. sandblasting, grinding or brushing said object in order to confer uniformity to the surface thereof and for removing possible ash.

16. Process according to claim 15, comprising the deposition of a ceramic/metallic coating in order to improve hardness and scratch resistance, by means of spraying, plasma spray, CVD, PVD or flame spray.

17. Process according to claim 15 or 16, wherein said surface treatment step comprises a step of applying one or more coating layers, with base: PTFE, PEEK, PFA, PES, FEP, Sol-Gel, silicone lacquer or glazed enamel.

18. Process according to any previous claim, wherein the hot molding is conducted in three successive steps in order to allow the gas to exit from the mixture being worked, wherein during a first step, 20-40% of the maximum compression force is applied, during a second step, no compression force is applied and only the punch of the mold is abutted against the mixture, and finally during a third step, 100% of the compression force equal to about 70-80 MPa is applied, so as to complete the molding.

## Patentansprüche

1. Verfahren zur Herstellung eines Küchenobjekts wie zum Beispiel einer Bratpfanne, einer Schüssel, eines Kochtopfes, einer Pfanne, eines Woks, eines Grills, eines Deckels, eines Topfes, eines Behälters, umfassend die folgenden Schritte:
des Mischens von Graphitpulvern mit einem organischen Bindemittel mit hohem Kohlenstoffgehalt und Additiven, bis eine gleichförmige Mischung erreicht ist, wobei die besagten Pulver in einem Prozentsatz vorhanden sind, der zwischen etwa 80 und etwa 86 Gew.-%, bezogen auf das Gesamtgewicht der Mischung, variieren kann, während das besagte organische Bindemittel ein Harzphenol umfasst, das in einem Prozentsatz vorhanden ist, der zwischen etwa 10 und etwa 17 Gew.-%, bezogen auf das Gesamtgewicht der Mischung, variieren kann, wobei die besagten Additive in einem Prozentsatz vorhanden sind, der zwischen etwa 1 und etwa 5 Gew.-%, bezogen auf das Gesamtgewicht der Mischung, variieren kann;
des Ladens der Mischung in eine erhitzte Form und des Heißformens der besagten Mischung, um ein Objekt zu erhalten;
des Entformens des Objekts aus der besagten Form und seines Platzierens in einen Schutzbehälter; und
des Wärmebehandelns des besagten Objekts in dem besagten Schutzbehälter in Abwesenheit von Sauerstoff oder mit Sauerstoff in einer Menge, die geringer ist als die der Atmosphäre, solange das besagte organische Bindemittel in Kohlenstoff umgewandelt wird,
worin die besagte Wärmebehandlung für eine Gesamtzeit von etwa 15-28 Stunden des Erhitzens bis zu einer Temperatur von etwa 700-900 °C erfolgt, um das organische Bindemittel in Kohlenstoff umzuwandeln.

2. Verfahren nach Anspruch 1, worin das besagte Formen bei der Schmelztemperatur des Bindemittels zwischen etwa 130 °C und 200 °C, z.B. zwischen 150 und 180 °C, ausgeführt wird.

3. Verfahren nach Anspruch 1 oder 2, worin die besagte Wärmebehandlung für eine Gesamtzeit von etwa 15-20 Stunden oder 20-28 Stunden des Erhitzens bis zu einer Temperatur von etwa 800-900 °C erfolgt, um das organische Bindemittel in Kohlenstoff umzuwandeln.

4. Verfahren nach Anspruch 3, worin die besagte Wärmebehandlung für eine Gesamtzeit von etwa 15-20 Stunden oder 20-28 Stunden des Erhitzens bis zu einer Temperatur von etwa 820-840 °C oder 850-900 °C erfolgt, um das organische Bindemittel in Kohlenstoff umzuwandeln.

5. Verfahren nach irgendeinem der vorangegangenen Ansprüche, worin während des besagten Mischschrittes Folgendes gemischt wird: Graphit mit etwa 84-86 Gew.-% und ein Phenolharz mit etwa 10-12 Gew.-%.

6. Verfahren nach irgendeinem der Ansprüche 1 bis 4, worin während des besagten Mischschrittes Folgendes gemischt wird: Graphit gleich etwa 85 Gew.-%, ein Phenolharz gleich etwa 12 Gew.-% und Additive gleich etwa 3 Gew.-%.

7. Verfahren nach irgendeinem der vorangegangenen Ansprüche, worin die besagten Additive ein oder mehrere Elemente aus der Gruppe umfassen, die einschließt: Schmiermittel, Schmieröle, Wachse, Stearinsäurederivate, Tenside, Weichmacher.

8. Verfahren nach irgendeinem der vorangegangenen Ansprüche, worin die besagten Pulver eine Korngröße zwischen 106 und 53 µm (150 und 300 MESH) aufweisen.

9. Verfahren nach irgendeinem der vorangegangenen Ansprüche, worin das besagte Heißformen bei einem Druck von mehr als 30 oder 40 MPa ausgeführt wird.

10. Verfahren nach irgendeinem der vorangegangenen Ansprüche, worin das besagte Heißformen für etwa 30-40 Sekunden pro mm Dicke des zu bearbeitenden Objekts durchgeführt wird.

11. Verfahren nach irgendeinem der vorangegangenen Ansprüche, worin der besagte Schritt der Wärmebehandlung des besagten Objekts die Karbonisierung oder Pyrolyse des organischen Bindemittels in einer derartigen Weise umfasst, dass eine vollständige Kohlenstoffstruktur erhalten wird.

12. Verfahren nach Anspruch 11, worin der besagte Wärmebehandlungsschritt einen Schritt des Einschließens des besagten Objekts in einen Behälter oder Kasten, beispielsweise mit metallischen Begrenzungswänden, umfasst, wobei Graphitpulver zugegeben werden, sodass die Sauerstoffmenge im Inneren des besagten Behälters oder Kastens teilweise durch das Graphitpulver und teilweise dadurch reduziert wird, dass es an den während der Behandlung erzeugten Wasserstoff gebunden wird, wodurch Wasserdampf gebildet wird.

13. Verfahren nach Anspruch 12, worin der besagte Wärmebehandlungsschritt der Reihe nach umfasst:
das Erhöhen der Temperatur bis auf etwa 300-350 °C mit einem niedrigen Gradienten, um die Vernetzung des Bindemittels zu vervollständigen und den Formgebungsadditiven das Verdampfen aus dem Objekt zu ermöglichen, wodurch dessen Porosität erhöht wird;
das Pyrolysieren oder Karbonisieren des Bindemittels bis zu einer Temperatur von etwa 600-650 °C, sodass das Bindemittel in verschiedene Verbindungen aufgespalten wird; und
das Erhitzen des Objekts auf eine Temperatur von etwa 800-900 °C, und während dieses Schrittes gibt es keinen Gewichtsverlust mehr, weil das Bindemittel vollständig karbonisiert ist.

14. Verfahren nach Anspruch 13, worin während des besagten Pyrolyse- oder Karbonisierungsschrittes, da die Reaktion progressiv erfolgt, die Heizrampe erhöht wird, weil die im vorhergehenden Schritt erhaltene Erhöhung der Porosität den Austritt der Pyrolyseprodukte erleichtert.

15. Verfahren nach irgendeinem der vorangegangenen Ansprüche, worin nach der besagten Wärmebehandlung ein Schritt zur Oberflächenbehandlung, z.B. Sandstrahlen, Schleifen oder Bürsten des besagten Objekts, durchgeführt wird, um seiner Oberfläche Gleichförmigkeit zu verleihen und um mögliche Asche zu entfernen.

16. Verfahren nach Anspruch 15, umfassend die Abscheidung einer Keramik-/Metallbeschichtung, um die Härte und Kratzfestigkeit durch Spritzen, Plasmaspritzen, CVD, PVD oder Flammspritzen zu verbessern.

17. Verfahren nach Anspruch 15 oder 16, worin der besagte Oberflächenbehandlungsschritt einen Schritt des Auftragens einer oder mehrerer Beschichtungsschichten umfasst, mit Basis: PTFE, PEEK, PFA, PES, FEP, Sol-Gel, Silikonlack oder glasierter Emaille.

18. Verfahren nach irgendeinem vorangegangenen Anspruch, worin das Heißformen in drei aufeinanderfolgenden Schritten durchgeführt wird, um dem Gas das Austreten aus der bearbeiteten Mischung zu ermöglichen, worin während eines ersten Schrittes 20-40 % der maximalen Kompressionskraft aufgebracht wird, während eines zweiten Schrittes keine Kompressionskraft aufgebracht wird und nur der Stempel der Form an der Mischung anliegt, und abschließend, während eines dritten Schrittes, 100 % der Kompressionskraft, die etwa 70-80 MPa entspricht, aufgebracht wird, um das Formen zu vervollständigen.

## Revendications

1. Procédé de production d'un objet de cuisine, tel qu'une poêle à frire, un bol, un poêlon, une casserole, un wok, un grill, un couvercle, un pot, un récipient, comprenant les étapes suivantes :
mélange des poudres de graphite avec un liant organique présentant une teneur élevée en carbone et additifs, jusqu'à l'obtention d'un mélange uniforme, lesdites poudres étant présentes dans un pourcentage qui peut varier entre environ 80 % et environ 86 % par poids du poids total du mélange, alors que ledit liant organique comprend une résine de phénol étant présente dans un pourcentage qui peut varier entre environ 10 % et environ 17 % par poids du poids total du mélange, lesdits additifs étant présents dans un pourcentage qui peut varier entre environ 1 % et environ 5 % par poids du poids total du mélange ;
chargement du mélange dans un moule chauffé et moulage à chaud dudit mélange pour obtenir un objet ;
extraction dudit objet dudit moule et son positionnement dans un récipient de protection ; et
traitement thermique dudit objet dans ledit récipient de protection en l'absence d'oxygène ou avec de l'oxygène dans une quantité inférieure à celle de l'atmosphère, tant que ledit liant organique est transformé en carbone,
dans lequel ledit traitement thermique survient pour une durée totale d'environ 15-28 heures de chauffage jusqu'à une température d'environ 700-900°C, afin de transformer le liant organique en carbone.

2. Procédé selon la revendication 1, dans lequel ledit moulage est réalisé à la température de fusion du liant, entre environ 130°C et 200°C, par ex. entre 150 et 180°C.

3. Procédé selon la revendication 1 ou 2, dans lequel ledit traitement thermique survient pour une durée totale d'environ 15-20 heures ou 20-28 heures de chauffage jusqu'à une température d'environ 800-900°C, afin de transformer le liant organique en carbone.

4. Procédé selon la revendication 3, dans lequel ledit traitement thermique survient pour une durée totale d'environ 15-20 heures ou 20-28 heures de chauffage jusqu'à une température de 820-840°C ou 850-900°C, afin de transformer le liant organique en carbone.

5. Procédé selon l'une quelconque des revendications précédentes, dans lequel pendant ladite étape de mélange, les éléments suivants sont mélangés : graphite à environ 84-86 % par poids, et une résine de phénol à environ 10-12 % par poids.

6. Procédé selon l'une quelconque des revendications 1 à 4, dans lequel pendant ladite étape de mélange, les éléments suivants sont mélangés : graphite à environ 85 % par poids, une résine de phénol à environ 12 % par poids et des additifs à environ 3 % par poids.

7. Procédé selon l'une quelconque des revendications précédentes, dans lequel lesdits additifs comprennent un ou plusieurs éléments du groupe comprenant : lubrifiants, huiles lubrifiantes, cires, dérivés d'acide stéarique, surfactants, plastifiants.

8. Procédé selon l'une quelconque des revendications précédentes, dans lequel lesdites poudres ont une granulométrie comprise entre 106 et 53 µm (150 et 300 MESH).

9. Procédé selon l'une quelconque des revendications précédentes, dans lequel ledit moulage à chaud est réalisé à une pression supérieure à 30 ou 40 MPa.

10. Procédé selon l'une quelconque des revendications précédentes, dans lequel ledit moulage à chaud est réalisé pendant environ 30 à 40 secondes pour chaque mm d'épaisseur de l'objet à travailler.

11. Procédé selon l'une quelconque des revendications précédentes, dans lequel ladite étape de traitement thermique dudit objet comprend la carbonisation ou la pyrolyse du liant organique, de manière à obtenir une structure totalement carbonée.

12. Procédé selon la revendication 11, dans lequel ladite étape de traitement thermique comprend une étage de fermeture dudit objet dans une gazette ou une boîte, par exemple comportant des parois de délimitation métalliques, en ajoutant des poudres de graphite, de telle sorte que la quantité d'oxygène à l'intérieur de ladite gazette ou boîte est réduite en partie par la poudre de graphite et en partie parce qu'elle sera liée à l'hydrogène produit pendant le traitement, formant de la vapeur d'eau.

13. Procédé selon la revendication 12, dans lequel ladite étape de traitement thermique comprend en séquence :
l'augmentation de la température jusqu'à environ 300-350°C, avec un gradient réduit afin de terminer la réticulation du liant et permettre aux additifs de moulage de s'évaporer de l'objet, augmentant sa porosité ;
la pyrolyse ou la carbonisation du liant, jusqu'à une température d'environ 600-650°C, de telle manière que le liant soit décomposé en divers composés ; et
le chauffage de l'objet à une température proche de 800-900°C, et pendant cette étape il n'y a plus de perte par poids étant donné que le liant est totalement carbonisé.

14. Procédé selon la revendication 13, dans lequel pendant ladite étape de pyrolyse ou de carbonisation, alors que la réaction a lieu progressivement, la rampe de chauffage est accrue étant donné que l'augmentation de la porosité obtenue à l'étape précédente facilite la sortie des produits de la pyrolyse.

15. Procédé selon l'une quelconque des revendications précédentes, dans lequel après ledit traitement thermique, une étape est exécutée pour le traitement de surface, par ex. par sablage, meulage ou brossage dudit objet afin de lui conférer une uniformité de surface et de retirer les cendres éventuelles.

16. Procédé selon la revendication 15, comprenant le dépôt d'un revêtement céramique/métallique afin d'améliorer la dureté et la résistance à la rayure, par pulvérisation, projection de plasma, CVD, PVD ou projection à la flamme.

17. Procédé selon la revendication 15 ou 16, dans lequel ladite étape de traitement de surface comprend une étape d'application d'une ou de plusieurs couches de revêtement, avec une base : PTFE, PEEK, PFA, PES, FEP, Sol-Gel, laque au silicone ou émail.

18. Procédé selon l'une quelconque des revendications précédentes, dans lequel le moulage à chaud est réalisé en trois étapes successives pour permettre au gaz de sortir du mélange travaillé, dans lequel pendant une première étape, 20 à 40 % de la force de compression maximale sont appliqués, pendant une deuxième étape, aucune force de compression n'est appliquée et seul le noyau du moule est en butée contre le mélange, et enfin pendant une troisième étape, 100 % de la force de compression égale à environ 70-80 MPa sont appliqués, afin d'achever le moulage.
